# EUROPÄISCHE PATENTANMELDUNG

(11) **EP 2 375 431 A2**
(43) Veröffentlichungstag der Anmeldung: **12.10.2011**
(21) Anmeldenummer: 11157722.7
(22) Anmeldetag: 10.03.2011
(51) Int. Cl.: H01H 9/02, H01L 41/113

(54) **Sendeeinrichtung**

(30) Priorität: 09.04.2010 DE 102010014595
(71) Anmelder: EnOcean GmbH, 82041 Oberhaching (DE)
(72) Erfinder: Schneider, Andreas, 81827 München (DE)
(74) Vertreter: Epping - Hermann - Fischer

(57) **Zusammenfassung**

Es ist eine Schaltsendeeinrichtung vorgesehen, die eine Gehäuseeinheit aufweist, die aus zumindest teilweise federndem Material besteht. Die Gehäuseeinheit ist ringförmig ausgebildet, wobei eine Sendeeinheit innerhalb der Gehäuseeinheit angeordnet ist, so dass die Ringform die Sendeeinheit umgibt und die Sendeeinheit innerhalb der Ringform hält. Das Gehäuse weist einen Bereich auf, der derart ausgebildet ist, dass er mittels einer von außerhalb des Gehäuses zugeführten Kraft elastisch verformbar ist, sodass diese Kraft über die Gehäuseeinheit auf die Sendeeinheit übertragbar ist.

## Beschreibung

Die Erfindung betrifft eine Sendeeinrichtung gemäß Patentanspruch 1.

Bereits bekannt sind Sendeeinrichtungen, beispielsweise Lichtschalter, die die üblichen Wandeinbauschalter (Unterputzschalter) oder Aufputzschalter ersetzen und batterielos energieautark arbeiten. Diese weisen den Nachteil auf, dass sie in der Regel nur für die Wandmontage geeignet, unflexibel und in der Herstellung sehr kostenaufwändig sind.

Der Erfindung liegt somit die Aufgabe zugrunde, eine Schaltsendeeinrichtung vorzusehen, die kostengünstig herstellbar ist und als mobile Einheit verwendbar ist.

Erfindungsgemäß ist eine Schaltsendeeinrichtung vorgesehen, die eine Gehäuseeinheit aufweist, die aus zumindest teilweise federndem Material besteht. Die Gehäuseeinheit ist ringförmig ausgebildet, wobei eine Sendeeinheit innerhalb der Gehäuseeinheit angeordnet ist, so dass die Ringform die Sendeeinheit umgibt und die Sendeeinheit innerhalb der Ringform hält. Das Gehäuse weist einen Bereich auf, der derart ausgebildet ist, dass er mittels einer von außerhalb des Gehäuses zugeführten Kraft elastisch verformbar ist, sodass diese Kraft über die Gehäuseeinheit auf die Sendeeinheit übertragbar ist.

Auf diese Weise kann die Sendeeinrichtung in die Hand genommen werden und mittels drücken mit der Hand auf das Gehäuse eine Sendefunktion der Sendeeinheit ausgelöst werden. Nachfolgend wird die Erfindung unter Bezugnahme auf die Zeichnung erläutert.

Es zeigen:
Figur 1 eine ringförmige Gehäuseeinheit in der Seitenansicht,
Figur 2 eine Sendeeinheit in der Seitenansicht,
Figur 3 Gehäuseeinheit und Sendeeinheit montiert in der Seitenansicht,
Figur 4 die Sendeeinheit in einer Draufsicht und
Figur 5 die Gehäuseeinheit in der Draufsicht.

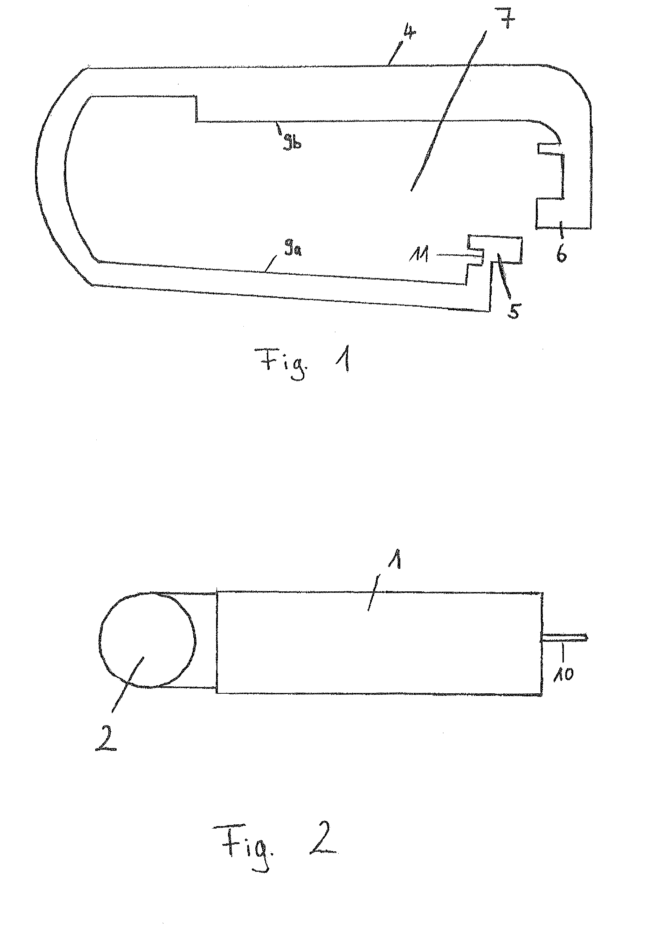

Figur 1 zeigt in einer Seitenansicht ein ringförmiges Gehäuse 4, das an Enden 5 und 6 eine Unterbrechung der Ringform aufweist. Im Innern der Ringform gibt es einen Gehäuseinnenraum 7.

Figur 2 zeigt eine Sendeeinheit 1, an der eine Antenneeinheit 2 einstückig mit ausgebildet ist. In der Sendeeinheit 1 ist sowohl ein Energiewandler zum Wandeln mechanischer Energie in elektrische Energie, eine Spannungsversorgungsschaltung, eine Sendeschaltung und eine Steuerschaltung enthalten. Die Steuerschaltung erzeugt eine Information, die der Sendesschaltung zugeführt wird. In der Sendeschaltung wird ein hochfrequentes Signal erzeugt, das mit der zugeführten Information moduliert. Dieses modulierte Hochfrequenzsignal wird der Antenne 2 zugeführt und über diese abgestrahlt.

Der in der Sendeeinheit enthaltene Energiewandler weist ein Einkoppelelement 10 auf, das aus der Sendeeinheit teilweise herausragt. Über dieses Einkoppelelement wird mechanische Energie dem Energiewandler zugeführt und von diesem in elektrische Energie umgewandelt.

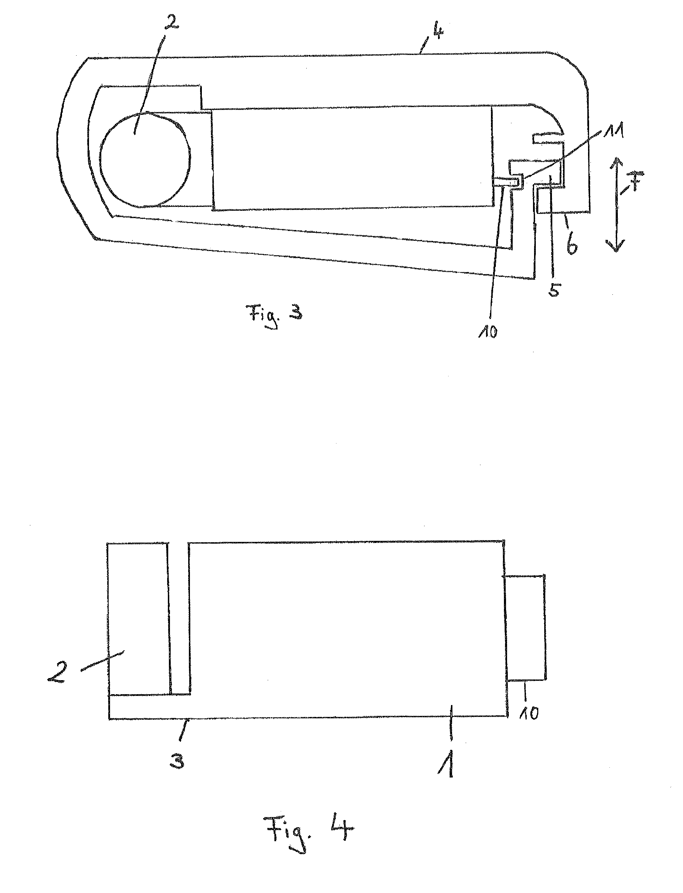

Gemäß Figur 3 ist die Sendeeinheit 1 in dem Innenraum 7 des Gehäuses 4 angeordnet. Dabei wird die Sendeeinheit zumindest teilweise durch die Ringform des Gehäuses eingespannt. Das Einkoppelelement 10 greift dabei in ein nutförmiges Auskoppelelemt 11 der Gehäuseeinheit 4 ein, so dass eine Gehäuseverformung im Bereich des verformbaren Bereich des Gehäuses über das Auskoppelement 11 mechanische Energie über das Einkoppelelement 10 dem Energiewandler zuführt.

Während in Figur 1 die Ringform in einem offenen Zustand dargestellt ist, ist in Figur 3 zu sehen, dass dadurch, dass das Gehäusematerial federnd elastisch ist, dieses zur Montage an der Unterbrechung ineinander schiebbar ist, sodass die sich gegenüberliegenden Nasen 5 und 6 ineinandergreifen. Durch die Elastizität des Materials drücken die Nasen 5 und 6 dauerhaft gegeneinander, sodass die Ringform quasi geschlossen bleibt. Durch die Elastizität des Gehäuseelementes wird die Sendeeinheit 2 an Flanken 9a, 9b der Ringform eingespannt gehalten. Somit kann die Sendeeinheit nicht aus der ringförmigen Gehäuseeinheit herausfallen.

Figur 4 zeigt eine Seitenansicht der Sendeeinheit 1 mit der Antenne 2, die über einen Steg 3 miteinander verbunden sind. Über diesen Steg 3 bzw. innerhalb dieses Steges 3 wird das von der Sendeeinheit 1 erzeugte hochfrequente Signal der Antenne 2 zugeführt.

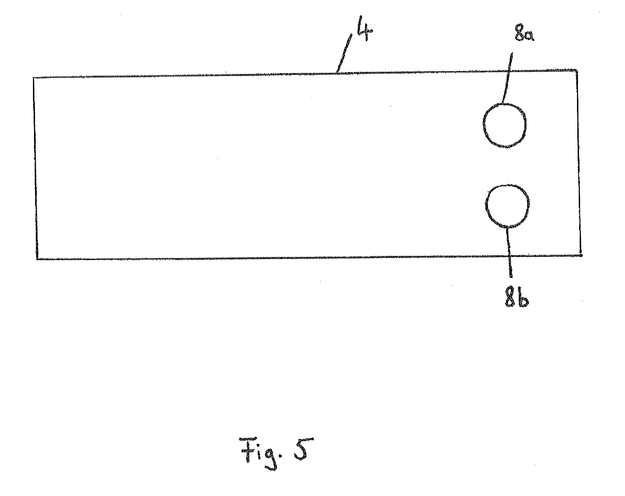

Figur 5 zeigt in einer Draufsicht das Gehäuse 4. Es sind zwei Druckflächen 8a und 8b ausgebildet. Unterhalb der Druckflächen 8a und 8b sind jeweils Sensoreinrichtungen vorgesehen, so dass die Sendeeinrichtung 1 eine Information erhält, ob ein Druck auf eine der Flächen 8a oder 8b ausgeübt wird.

Nachfolgend soll die Funktionsweise näher erläutert werden. Wie in Figur 3 zu sehen ist, ist trotz des quasi verschlossenen Zustands der Ringform des Gehäuses 1, in dem Bereich, in dem die Ringform geöffnet ist, mittels Ausüben eines externen Druckes das Verschieben der Ringform gegeneinander möglich, wie durch den Pfeil F angedeutet ist. Somit ist mittels Druckausübung ein Verformen der Ringform in Pfeilrichtung möglich, wobei bei Nachlassen des Druckes durch die Elastizität des Gehäusematerials eine Rückbewegung in die Ausgangsform erfolgt, sodass die Nasen 5 und 6 aneinanderstoßen und einen Anschlag der Rückbewegung darstellen. Durch das Verformen der Ringform wird mittels des Auskoppelelemtes 11 das Einkoppelelement mitbewegt, so dass ein Druck auf den elektromechanischen Enegiewandler 10 in der Sendeeinrichtung 1 ausgeübt wird. Das gleiche geschieht, wenn der mechanische Druck auf das Gehäuse wieder nachlässt: durch die eleastischen Eigenschaften bewegen sich die Gehäuseteile wieder in die Ausgangsposition, dabei wird erneut der elektromechanische Energiewandler 10 betätigt und ein Funktelegramm abgesendet.

Darüber hinaus kann über die Sensoreinrichtungen unterhalb der Druckflächen 8a, 8b von der Steuerschaltung innerhalb der Sendeeinheit 1 ermittelt werden, auf welchen der Druckflächen 8a und 8b gedrückt wurde. Entsprechend erzeugt die Steuersschaltung ein Signal, das beispielsweise beim Druck auf die Druckfläche 8a das hochfrequente Signal mit dem Befehl "ein" codiert und bei Druck auf die Druckfläche 8b mit dem Zeichen "aus" codiert. Entsprechend sind andere Codierungen, wie beispielsweise "auf" und "zu" oder "rauf" und "runter" oder "heller" und "dunkler" möglich. Das Vorhandensein der Druckflächen ist jedoch nur optional vorgesehen und nicht zwingend notwendig. Grundsätzlich kann die Sendeeinrichtung auch derart ausgebildet sein, dass bei einem Ausüben eines Druckes auf das Gehäuse eine erste Information gesendet wird und beim Loslassen und elastischen Zurückschnappen in die Ausgangslage eine zweite Information gesendet wird, wobei in diesem Beispiel die wie auch in dem zuvor beschriebenen Beispiel diese Information in Form eines Sendetelegramms abgestrahlt wird. Genauso kann vorgesehen sein, dass bei einem ersten Betätigen, d.h. Drücken und Loslassen des Gehäuses eine erste Information und bei einer zweiten Betätigung eine zweite, von der ersten Information verschiedene Information gesendet wird.

In einer alternativen Form ist es möglich, dass nur eine Druckfläche vorgesehen ist, sodass beim ersten Ausüben eines Druckes auf die Druckfläche ein "ein" gesendet wird und beim nächsten Druck ein "aus" gesendet wird. Dabei ist es notwendig, dass tatsächlich auf die Druckfläche gedrückt wird. Erfolgt allein ein Verformen des Gehäuses, erfolgt kein Aussenden einer Information.

In einer weiteren Variante ist es möglich, dass die Seitenflächen, die in der beispielsweise in Figur 3 dargestellten Darstellung die Sendeeinheit gegenüber der Umgebung seitlich freilässt, oder das Gehäuse als Ganzes, mit einem elastischen Schutzüberzug zu versehen, um Schutz gegen Staub beziehungsweise Feuchtigkeit zu gewähren. Die Elastizität des Schutzüberzuges ermöglicht, dass die Gehäuseeinheit weiterhin verformbar ist.

Ohne diesen Schutzüberzug weist die offene Anordnung jedoch den Vorteil aus, dass das Gehäusematerial und das Material, aus dem eine Umhüllung der Sendeeinheit 1 gefertigt ist, eine unterschiedliche Farbgebung aufweisen können, sodass die Möglichkeit gegeben ist, diese gestalterisch zu nutzen, sodass die Schaltsendeeinrichtung auffällig gestaltbar ist.

Es wird noch darauf hingewiesen, dass die tatsächliche Form des Gehäuses nur eine untergeordnete Bedeutung aufweist. Wesentlich ist, dass die Gehäuseeinheit gegenüber der Sendeeinheit verformbar ist und damit mechanische Energie auf den Energiewandler übertragbar ist.

## Patentansprüche

1. Sendeeinrichtung mit einer Gehäuseeinheit (4), das aus zumindest teilweise federndem Material besteht und mit einer Sendeeinheit(1,2), wobei die Gehäuseeinheit ringförmig ausgebildet ist und dieser Ring die Sendeeinheit derart umgibt, dass die Sendeeinheit innerhalb der Ringform gehalten ist, das Gehäuse einen Bereich aufweist, der derart ausgebildet ist, dass er mittels einer von außerhalb des Gehäuses zugeführten Kraft elastisch derart verformbar ist, sodass diese Kraft über die Gehäuseeinheit auf zumindest ein Teil der Sendeeinheit übertragbar ist.

2. Sendeeinrichtung nach Anspruch 1, bei der die Ringform des Gehäuses (4) eine Unterbrechung aufweist.

3. Sendeeinrichtung nach Anspruch 2, bei der an der Unterbrechung der Ringform die beiden sich gegenüberliegenden Enden (5,6) ineinandergreifen.

4. Sendeeinrichtung nach einem der vorhergehenden Ansprüche, wobei die Sendeeinheit (1,2) ein mechanisches Einkoppelelement (10) aufweist, das mit einem mechanischen Auskoppelelement (11) der Gehäuseeinheit (4) in Eingriff steht.

5. Sendeeinrichtung nach einem der vorhergehenden Ansprüche, wobei die Gehäuseeinheit (4) zumindest eine Druckfläche (8a; 8b)aufweist.

6. Sendeeinrichtung nach einem der vorhergehenden Ansprüche, wobei die Sendeeinheit einen Energiewandler aufweist, der mechanische Energie in elektrische Energie wandelt.

7. Sendeeinrichtung nach Anspruch 6, wobei der Energiewandler ein elektromagnetischer Wandler oder ein elektrostriktiver Wandler oder ein piezoelektrischer Wandler ist.

8. Sendeeinrichtung nach einem der Ansprüche 5 bis 7 wobei unterhalb der zumindest einen Druckfläche 8a, 8b eine Sensoreinheit ausgebildet ist, die mit der Sendeeinheit elektrisch gekoppelt ist.
